**Europäisches Patentamt**

**European Patent Office**

**Office européen des brevets**

(19)

(11) Veröffentlichungsnummer : **0 238 462 B1**

## (12) EUROPÄISCHE PATENTSCHRIFT

(45) Veröffentlichungstag der Patentschrift :
**20.03.91 Patentblatt 91/12**

(51) Int. Cl.⁵ : **B23K 9/12**

(21) Anmeldenummer : **87850050.3**

(22) Anmeldetag : **13.02.87**

(54) Verfahren und Einrichtung für die Regelung des Schweissverlaufes beim Lichtbogenschweissen.

(30) Priorität : **17.02.86 SE 8600680**

(43) Veröffentlichungstag der Anmeldung :
**23.09.87 Patentblatt 87/39**

(45) Bekanntmachung des Hinweises auf die
Patenterteilung :
**20.03.91 Patentblatt 91/12**

(84) Benannte Vertragsstaaten :
**AT BE CH DE ES FR GB IT LI NL SE**

(56) Entgegenhaltungen :
**DE-A- 3 228 552**
**US-A- 4 349 720**

(56) Entgegenhaltungen :
**PATENT ABSTRACTS OF JAPAN, Band 9, Nr.
226 (M-412)[1949], 12. September 1985; &
JP-A-60 82 272 (MITSUBISHI DENKI K.K.)
10.05.1985
PATENT ABSTRACTS OF JAPAN, Band 10, Nr.
33 (M-452)[2090], 8. Februar 1986; & JP-A-60
187 468 (MITSUBISHI JUKOGYO K.K.)
24.09.1985**

(73) Patentinhaber : **ESAB Aktiebolag
Box 8004 Herkulesgatan 72
S-402 77 Göteborg (SE)**

(72) Erfinder : **Budai, Peter
Box 69
S-695 00 Laxa (SE)**
Erfinder : **Lagerqvist, Ulf
Flottarstigen 18
S-695 00 Laxa (SE)**

(74) Vertreter : **Frisch, Kurt
c/o ESAB AB Box 8004
S-402 77 Göteborg (SE)**

EP 0 238 462 B1

## Beschreibung

Die vorliegende Erfindung bezieht sich auf ein Verfahren für die Regelung eines Schweißverlaufes beim Lichtbogenschweißen eines Werkstücks mit einer abschmelzenden Elektrode, wobei der Schweißverlauf sich alternierend aus Lichtbogenperioden, während denen das Elektrodenmaterial schmilzt, und Kurzschlußperioden, während denen das geschmolzene Elektrodenmaterial von der Elektrode zum Werkstück überführt wird, zusammensetzt, bei welchem Verfahren eine erste vom Schweißverlauf abhängige Größe gemessen wird und ein dieser Größe entsprechendes Signal und ein Sollwertsignal gebildet werden, wobei das Sollwertsignal eine Funktion eines zweiten Signals ist, das einer zweiten vom Schweißverlauf abhängigen Größe entspricht, und die erste Größe in Abhängigkeit von der Regelabweichung zwischen dem Sollwertsignal und dem ersten Signal geregelt wird.

Die Erfindung bezieht sich auch auf eine Einrichtung für die Regelung einer Energiequelle eines Gerätes für Lichtbogenschweißung, das für einen Schweißverlauf vorgesehen ist, der sich alternierend aus Lichtbogenperioden, während denen Elektrodenmaterial schmilzt, und Kurzschlußperioden, während denen das geschmolzene Elektrodenmaterial von der Elektrode zum Werkstück überführt wird, zusammensetzt, welche Einrichtung einen ersten Signalumformer für die Messung einer vom Schweißverlauf abhängigen ersten Größe und für die Bildung eines der ersten Größe entsprechenden Signals, einen zweiten Signalumformer für die Messung einer zweiten vom Schweißverlauf abhängigen Größe und für die Bildung eines der zweiten Größe entsprechenden Signals, einen an den Ausgang des zweiten Signalumformers angeschlossenen ersten Stromkreis für die Bildung eines vom zweiten Signal abhängigen dritten Signals und einen zweiten Stromkreis besitzt, der das dritte Signal empfängt, ein Sollwertsignal aus dem dritten Signal und einem Referenzsignal und eine Regelabweichung bildet, die der Differenz zwischen dem Sollwertsignal und dem ersten Signal entspricht, und der an seinem Ausgang die Regelabweichung für die Regelung der Energiequelle in Abhängigkeit dieser Regelabweichung abgibt.

Beim Lichtbogenschweißen und insbesondere beim manuellen Schweißen, treten während der Lichtbogenperioden Probleme mit der Stabilität der Tropfenbildung auf. Manchmal bilden sich allzu große Tropfen, die den Rhythmus der Tropfenbildung stören und zum Verspritzen neigen, was sich nachteilig auf die Wirtschaftlichkeit auswirkt. Bisher hat man nicht ermitteln können, wie man dieses Stabilitätsproblem lösen könnte, um bessere Schweißergebnisse zu erhalten.

Bei den bisher bekannten Verfahren für die Regelung einer Schweißstromquelle wird ein einem bestimmten Arbeitspunkt entsprechender Stromsollwert eingestellt, der Schweißstrom und die Bogenspannung gemessen und der Schweißstromsollwert in Abhängigkeit der gemessenen Bogenspannung geändert und die Stromquelle mittels der Regelabweichung geregelt, die dem Unterschied zwischen dem Stromsollwert und dem gemessenen Stromwert entspricht.

Bei dieser Regelung ist es nicht möglich mit Hilfe des Schweißstroms die Wachstumsgeschwindigkeit des Tropfens zu regeln. Deshalb erhält man die oben erwähnte instabile Tropfenbildung.

Die Erfindung hat sich zur Aufgabe gestellt ein Verfahren für die Regelung des Schweißverlaufes zu schaffen, mit dem ein stabilerer Schweißverlauf und außerdem kürzere Perioden, d.h. eine kürzere Zeit für die Lichtbogen- und Kurzschlußperiode erreicht werden, wodurch die Wirtschaftlichkeit erhöht wird.

Die Erfindung hat sich auch zur Aufgabe gestellt, eine Einrichtung für die Durchführung des Verfahrens zu schaffen.

Die Aufgabe wird dadurch gelöst, daß das zweite Signal gefiltert wird und das gefilterte Signal für die Bildung des Sollwertsignales herangezogen wird, wobei Änderungen der zweiten vom Schweißverlauf abhängigen Größe, die mit einer Frequenz erfolgen, die außerhalb eines bestimmten Frequenzbereichs liegt, der eine gewünschte Kurzschlußfrequenz des Schweißverlaufes umfaßt, gedämpft werden, so daß das Sollwertsignal von diesen Änderungen weniger beeinflußt wird als von Änderungen die mit einer Frequenz in dem genannten Frequenzbereich ablaufen.

Eine Einrichtung der eingangs erwähnten Gattung für die Durchführung des Verfahrens gemäß der Erfindung zeichnet sich dadurch aus, daß ein Bandpaß, in dessen Bandbreite eine gewünschte Kurzschlußfrequenz des Schweißverlaufes enthalten ist, zwischen dem Ausgang des zweiten Signalumformers und dem Eingang des zweiten Stromkreises eingeschaltet ist.

Die obengenannte erste Größe ist vorzugsweise der Schweißstrom bzw. die Bogenspannung und die andere Größe die Bogenspannung bzw. der Schweißstrom. Es können jedoch auch Kombinationen dieser Größen wie beispielsweise die Schweißenergie verwendet werden. Es ist auch denkbar andere charakteristische Größen des Schweißverlaufes heranzuziehen. Im folgenden wird angenommen, daß die erste Größe der Schweißstrom und die zweite Größe die Bogenspannung ist.

Unter Bogenspannung wird hier eine für die Messung zugängliche Spannung verstanden, die die tatsächliche Bogenspannung zwischen Elektrodenspitze und Werkstück umfaßt. Die gemessene Bogenspannung umfaßt üblicherweise auch den Spannungsfall im freien Elektrodenende zwischen dem Kontaktmundstück des Schweißbrenners und der Elektrodenspitze.

Der Erfindung liegt die Tatsache zugrunde, daß der Schweißverlauf eine gewisse Periodizität aufweist. Diese Periodizität liegt beim manuellen Schweißen im Frequenzbereich von 1 bis 80 Hz, vorzugsweise 3 bis 50 Hz und beim halbautomatischen und automatischen Schweißen im Frequenzbereich von 50 bis 250 Hz, vorzugsweise 50 bis 150 Hz. Ein stabilerer Schweißbetrieb kann teils durch Verstärkung derjenigen Periodizität, die sich durch Änderungen der Bogenspannung mit Frequenzen eines innerhalb des genannten Frequenzbereiches liegenden schmäleren Frequenzbandes äußert und teils durch Dämpfung der Bogenspannungsänderungen außerhalb des genannten Frequenzbereiches, die einen zu raschen oder zu langsamen Tropfenzuwachs verursachen, erreicht wereden.

In der vorliegenden Erfindung wird auch auf den eingestellten statischen Stromsollwert, d.h. den Arbeitspunkt Rücksicht genommen, Insgesamt wird mit der erfindungsgemäßen Einrichtung ein stabiler Schweißverlauf und damit eine bessere Wirtschaftlichkeit erreicht.

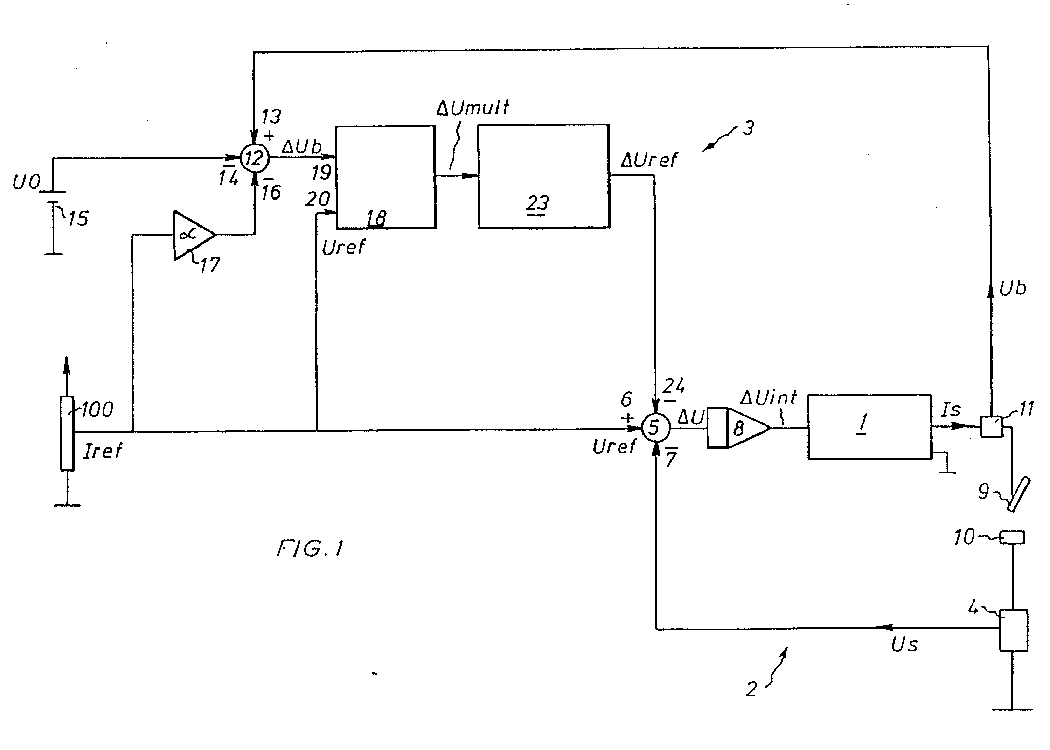

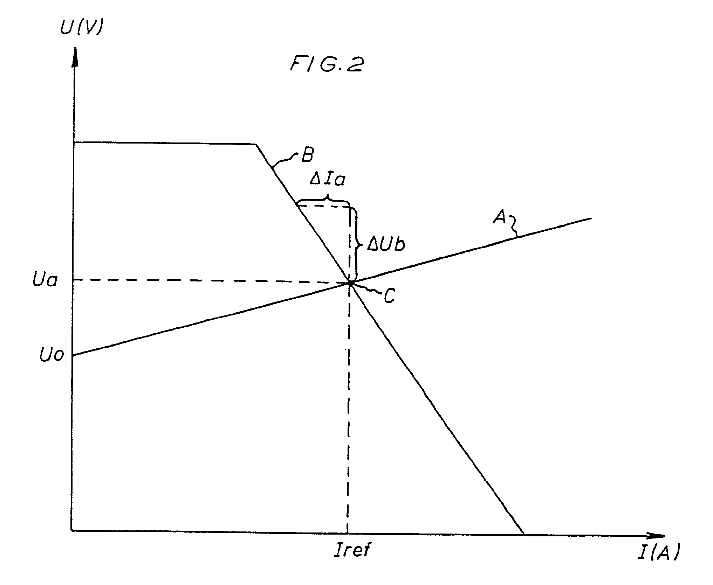

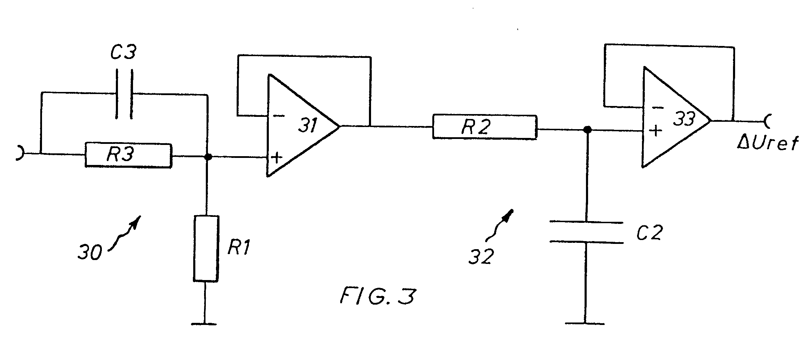

Im nachfolgenden wird die vorliegende Erfindung anhand eines Ausführungsbeispiels unter Hinweis auf die beigefügte Zeichnung beschrieben. Fig. 1 ist ein Blockschema der Einrichtung gemäß der Erfindung. Fig. 2 ist ein Spannung-Strom-Diagramm, das eine statische Arbeitslinie der erfindungsgemäßen Einrichtung zeigt. Fig. 3 ist ein Stromkreis, der eine vorteilhafte Ausführung des Bandpasses der Einrichtung in Fig. 1 zeigt.

In Fig. 1 ist eine für ein Schweißgerät vorgesehene stromgeregelte Schweißstromquelle 1 mit den zugehörigen Regeleinrichtungen dargestellt. Die Regeleinrichtungen umfassen ein an und für sich bekanntes Stromregelsystem, das hier allgemein mit dem Bezugszeichen 2, und einen Sollwertsteller, der allgemein mit dem Bezugszeichen 3 bezeichnet wird.

Das Stromregelsystem enthält ein Meßglied 4, das den von der Stromquelle gelieferten Schweißstrom Is mißt und eine diesem Strom entsprechende Spannung Us bildet, einen Subtrahierer 5, der an seinem P-Eingang 6 von einer dem Stromsollwert entsprechenden Referenzspannung Uref und an einem ersten N-Eingang 7 von der vom Meßglied 4 erzeugten Spannung Us gespeist wird, und dessen Ausgang mit einem PI-Glied 8 verbunden ist, dessen Ausgang mit der Stromquelle 1 verbunden ist.

Die Stromquelle 1 liefert den Schweißstrom Is, der über die Schweißelektrode 9 und das Werkstück 10 zur Erde und zur Stromquelle 1 zurückfließt.

Mit dem Meßglied 4 wird der Strom Is gemessen und die Spannung Us gebildet, die im Subtrahierer 5 von der Referenzspannung Uref abgezogen wird.

Die auf diese Weise gebildete Regelabweichung $\Delta U$ wird im PI-Glied 8 integriert und das Ausgangssignal $\Delta U_{int}$ steuert die Stromquelle. Das Stromregelsystem 2 sorgt somit auf bekannte Weise dafür, daß sich das Schweißstromsignal Is soweit als möglich dem Referenzwert Uref anpaßt, der einem bestimmten eingestellten Stromreferenzwert Iref entspricht. Der Referenzwert Uref wird mit Hilfe des Potentiometers 100 eingestellt.

Der Sollwertsteller 3 ist mit einem Meßglied 11, das die Bogenspannung zwischen der Elektrode 9 und dem Werkstück 10 mißt und ein der Bogenspannung proportionales Signal Ub bildet, mit einem Subtrahierer 12, dessen P-Eingang mit dem Ausgang des Meßgliedes 11, dessen erster N-Eingang 14 mit einer Spannungsquelle 15, die eine konstante Spannung UO liefert, verbunden ist, und dessen zweiter N-Eingang 16 mit dem Potentiometer 100 über einen Verstärker 17 mit einem Verstärkungsfaktor $\alpha$ verbunden ist, versehen. Weiters gehört zum Sollwertsteller 3 ein Multiplikator 18, dessen einer Eingang 19 mit dem Ausgang des Subtrahierers 12 und dessen zweiter Eingang 20 mit dem Potentiometer 100 verbunden sind, und ein Bandpaß 23, dessen Eingang mit dem Ausgang des Multiplikators und dessen Ausgang mit dem zweiten N-Eingang des Subtrahierers 5 verbunden ist.

Der Sollwertsteller 3 dient zur Einstellung eines Sollwerts in Abhängigkeit von der Bogenspannung und arbeitet auf folgende Wiese : Die Bogenspannung wird mit dem Meßglied 11 gemessen und ein der Bogenspannung entsprechendes Signal Ub wird gebildet. Die Abweichung der Bogenspannung von der Spannung, die einem auf der Belastungslinie des Lichtbogens eingestellten Arbeitspunktes entspricht, für den die Gleichung $Ua = \alpha \times Iref + UO$ gilt, worin $\alpha$ eine Konstante, Iref der Stormsollwert und UO eine konstante Spannung ist, wird durch den Subtrahierer 12 bestimmt. Das auf diese Weise erzeugte Differenzsignal $\Delta Ub$ wird an den ersten Eingang des Multiplikators 18 abgegeben. $\Delta Ub$ wird im Multiplikator mit der Referenzspannung Uref und einer im Multiplikator einstellbaren Konstanten multipliziert. Durch diese Multiplikation wird der aktuelle Arbeitspunkt auf der Belastungslinie des Lichtbogens berücksichtigt. Je größer der eingestellte Stromsollwert ist, desto größer ist die Änderung des Sollwertes aufgrund einer Änderung der Bogenspannung, die mit einer Frequenz im Bereich des Bandpasses 23 erfolgt.

Aus Fig. 2 läßt sich der Zusammenhang der obengenannten Signalbehandlung in einem Spannung-Strom-Diagramm erkennen. In diesem Diagramm ist die Belastungslinie A des Lichtbogens, entsprechend der Gleichung $U = \alpha \times I + UO$ und die statische Arbeitslinie B für einen bestimmten Arbeitspunkt C, für den gemäß oben die Gleichung $Ua = \alpha \times Iref + UO$ gilt, dargestellt. Die Neigung der statischen Arbeitslinie im Arbeitspunkt ist durch $K = dU/dI$ gegeben, wobei die Neigung in den verschiedenen Punkten der Lichtbogenlinie verschieden ist. Mit zunehmender Größe des Stromsollwertes Iref nimmt der absolute Wert von dU/dI ab, d.h. die Arbeitslinie B wird flacher. Durch Wahl eines passenden Wertes der im Multiplikator einstellbaren Konstanten vergrößert oder veringert sich der Einfluß von Iref auf die Neigung der Arbeitslinie und auf das Ausmaß der zunehmenden Verflachung in Abhängigkeit von der Zunahme von Iref. Die Abweichung der gemessenen Bogenspannung von der dem Arbeitspunkt entsprechenden Spannung Ua zu einem gewissen Zeitpunkt des Schweißverlaufes ist durch $\Delta Ub$ gegeben. Dieser Spannungsdifferenz entspricht eine Änderung $\Delta Ia$ der eingestellten Stromreferenz Iref. Mit Hilfe des Multiplikators 18 wird ein Spannungswert $\Delta Umult$ errechnet, der diesem Unterschied $\Delta Ia$ entspricht. Wie aus Fig. 1 entnommen werden kann, wird das Ausgangssignal vom Multiplikator 18 an den Bandpaß 23 abgegeben und gefiltert, wonach das gefilterte Signal $\Delta Uref$ vom Referenzsignal Uref subtrahiert wird, um das Sollwertsignal zu bilden.

Die Charakteristik des Bandpasses ist so gewählt, daß Änderungen der Bogenspannung, die mit Frequenzen erfolgen, die kleiner oder größer sind als die Frequenzen eines bestimmten Frequenzintervalls, in dem die gewünschte Kurzschlußfrequenz enthalten ist, mehr gedämpft werden als Änderungen der Bogenspannung, die mit einer Frequenz innerhalb dieses Intervalls erfolgen. Das führt dazu, daß die gewünschte Kurzschlußfrequenz stabilisiert wird, womit ein besseres Schweißresultat erhalten wird.

In Fig. 3 ist eine vorteilhafte Filterschaltung gezeigt. Diese Schaltung umfaßt ein PD-Glied 30, einen ersten Impedanzwandler 31, einen Tiefpaß 32 und einen zweiten Impedanzwandler 33. Das PD-Glied 30 besitzt einen Spannungsteiler, dessen einer Teil aus einem Widerstand R3 mit einem parallelgeschalteten Kondensator C3 besteht und dessen anderer Teil nur einen Widerstand R1 enthält. Der Verbindungspunkt zwischen R1 und R3//C3 ist an den P-Eingang des ersten Impedanzwandlers 31 geschaltet, dessen Ausgang mit dem Tiefpaß 32 verbunden ist. Der Tiefpaß 32 enthält einen Widerstand R2, der zwischen dem Ausgang des ersten Impedanzwandlers 31 und dem P-Eingang des anderen Impedanzwandlers 33 geschaltet ist, wobei der P-Eingang des anderen Impedanzwandlers durch einen Kondensator C2 mit Erde verbunden ist. Selbstverständlich können ein derartiger Bandpaß und die darin enthaltenen Komponenten auch auf andere Weise realisiert werden.

Für eine Lichtbogenlinie mit den Werten UO = 20V und $\alpha = 0,04$ erwiesen sich die folgenden Werte für die obengenannten Komponenten als zweckmäßig :    R3 = 27kohm,    R1 = 18kohm, R2 = 15kohm,   C3 = 2,2 mikroF, und C2 = 0,47 mikroF.

Die Erfindung kann natürlich im Rahmen der nachfolgenden Patentansprüche auf verschiedene Weise modifiziert werden. So läßt sich beispielsweise die Wirkungsweise des Sollwertstellers 3 auch durch ein Programm eines Mikroprozessors realisieren.

## Ansprüche

1. Verfahren für die Regelung eines Schweißverlaufes beim Lichtbogenschweißen eines Werkstücks (10) mit einer abschemlzbaren Elektrode (9), wobei der Schweißverlauf sich alternierend aus Lichtbogenperioden, während denen Elektrodenmaterial schmilzt, und Kurzschlußperioden, während denen das geschmolzene Elektrodenmaterial von der Elektrode zum Werkstück überführt wird, zusammensetzt, bei welchem Verfahren eine erste vom Schweißverlauf abhängige Größe gemessen wird und ein dieser Größe entsprechendes erstes Signal (Us) und ein Sollwertsignal gebildet werden, wobei das Sollwertsignal eine Funktion eines zweiten Signals (Ub) ist, das einer zweiten vom Schweißverlauf abhängigen Größe entspricht, und die erste größe in Abhängigkeit von der Regelabweichung zwischen dem Sollwertsignal und dem ersten Signal (Us) geregelt wird, dadurch **gekennzeichnet**, daß das zweite Signal (Ub) gefiltert wird und das gefilterte Signal ($\Delta Uref$) für die Bildung des Sollwertsignals herangezogen wird, wobei Änderungen der zweiten vom Schweißverlauf abhängigen Größe, die mit einer Frequenz erfolgen, die außerhalb eines bestimmten Frequenzbereiches liegt, der eine gewünschte Kurzschlußfrequenz des Schweißverlaufes umfaßt, gedämpft werden, so daß das Sollwertsignal von diesen Änderungen weniger beeinflußt wird als von Änderungen, die mit einer Frequenz in dem genannten Frequenzbereich ablaufen.

2. Verfahren nach Anspruch 1, dadurch **gekennzeichnet**, daß das Sollwertsignal, dessen Wert von einem für die Schweißung eingestellten Arbeitspunkt (Ua, Iref) abhängt, durch Subtraktion des gefilterten Signals ($\Delta Uref$) von einem Referenzsignal (Uref) erhalten wird.

3. Verfahren nach Anspruch 1 oder 2, dadurch **gekennzeichnet**, daß vor der Filterung ein Differenzsignal ($\Delta Ub$) aus dem zweiten Signal (Ub) und einem dem Arbeitspunkt entsprechenden Signal (Ua) gebildet wird.

4. Verfahren nach Anspruch 3, dadurch **gekennzeichnet**, daß das Differenzsignal ($\Delta Ub$) nach der Subtraktion des dem Arbeitspunkt entsprechenden Signals (Ua) jedoch vor der Filterung mit dem Referenzsignal (Uref) multipliziert wird.

5. Einrichtung für die Regelung einer Energiequelle (1) eines Gerätes für Lichtbogenschweißung, das für einen Schweißverlauf vorgesehen ist, der sich alternierend aus Lichtbogenperioden, während denen Elektrodenmaterial schmilzt, und Kurzschlußperioden, während denen das geschmolzene Elektrodenmaterial von der Elektrode zum Werkstück überführt wird, zusammensetzt, welche Einrichtung einen ersten Signalumformer (4) für die Messung einer vom Schweißverlauf abhängigen ersten Größe (Is) und für die Bildung eines der ersten Größe entsprechenden Signals (Us), einen zweiten Signalumformer (11) für die Messung einer zweiten von Schweißverlauf abhängigen Größe und für die Bildung eines der zweiten Größe entsprechenden Signals (Ub), einen an den Ausgang des zweiten Signalumformers (11) angeschlossenen ersten Stromkreises (12-20) für die Bildung eines vom zweiten Signal (Ub) abhängigen dritten Signals (ΔUref), und einen zweiten Stromkreis (100, 5, 6, 24) besitzt, der das dritte Signal (ΔUref) empfängt, ein Sollwertsignal aus dem dritten Signal und einem Referenzsignal (Uref) und eine Regelabweichung (ΔU) bildet, die der Differenz zwischen Sollwertsignal und dem ersten Signal (Us) entspricht und der an seinem Ausgang die Regelabweichung für die Regelung der Energiequelle (1) in Abhängigkeit dieser Regelabweichung abgibt, dadurch **gekennzeichnet**, daß ein Bandpaß (23) in dessen Bandbreite eine gewünschte Kurzschlußfrequenz des Schweißverlaufes enthalten ist, zwischen dem Ausgang des zweiten Signalumformers (11) und dem Eingang des zweiten Stromkreises (100, 5, 6, 24) eingeschaltet ist.

6. Einrichtung nach Anspruch 5, dadurch **gekennzeichnet**, daß der Bandpaß (23) zwischen dem Ausgang des ersten Stromkreises (12-20) und dem Eingang des zweiten Stromkreises (100, 5, 6, 24) eingeschaltet ist.

7. Einrichtung nach Anspruch 6, dadurch **gekennzeichnet**, daß der Bandpaß (23) im wesentlichen aus einem differenzierenden Kreis (30) und einem Tiefpaß (32) besteht.

8. Einrichtung nach Anspruch 6 oder 7, dadurch **gekennzeichnet**, daß der zweite Stromkreis (100, 5, 6, 24) für die Bildung des Sollwertsignals einen Subtrahierer (5) enthält, der an einem P-Eingang (6) das Referenzsignal (Uref) und an einem N-Eingang (24) das dritte Signal (ΔUref) empfängt.

9. Einrichtung nach Anspruch 6, 7 oder 8, dadurch **gekennzeichnet**, daß der erste Stromkreis (12-20) für die Bildung des dritten Signals einen Subtrahierer (12) enthält, der die Differenz zwischen dem zweiten Signal (Ub) und dem Signal (Ua) bildet, das einem bestimmten Arbeitspunkt entspricht.

10. Einrichtung nach Anspruch 9, dadurch **gekennzeichnet**, daß der erste Stromkreis (12-20) einen Multiplikator (18) enthält, der mit einem dem Ausgang des Subtrahierers (19) verbundenen ersten Eingang einem vom Referenzsignal (Uref) gespeisten zweiten Eingang und einem mit dem Bandpaß (23) verbundenen Ausgang versehen ist.

## Claims

1. Method of controlling the proceeding of a welding operation in the arc welding of a workpiece (10) with a meltable electrode (9), the welding operation being composed alternately of arcing periods, during which electrode material melts, and shorting periods, during which the molten electrode material is transferred from the electrode to the workpiece, in which method a first variable, dependent on the proceeding of the welding operation, is measured and a first signal (Us) corresponding to this variable and a setpoint signal are formed, the setpoint signal being a function of a second signal (Ub), which corresponds to a second variable dependent on the proceeding of the welding operation, and the first variable being controlled between the setpoint signal and the first signal (Us) in dependence on the system deviation, characterized in that the second signal (Ub) is filtered and the filtered signal (ΔUref) is used for the formation of the setpoint signal, alterations of the second variable dependent on the proceeding of the welding operation which take place at a frequency outside a certain frequency range, which comprises a desired shorting frequency of the welding operation, being damped, so that the setpoint signal is influenced less by these alterations than by alterations which occur at a frequency in the named frequency range.

2. Method according to Claim 1, characterized in that setpoint signal, the value of which depends on an operating point (Ua, Iref) set for the welding, is obtained by subtraction of the filtered signal (ΔUref) from a reference signal (Uref).

3. Method according to Claim 1 or 2, characterized in that, before the filtering, a differential signal (ΔUb) is formed from the second signal (Ub) and a signal (Ua) corresponding to the operating point.

4. Method according to Claim 3, characterized in that, after the subtraction of the signal (Ua) corresponding to the operating point, but before the filtering, the differential signal (ΔUb) is multiplied by the reference signal (Uref).

5. Device for controlling an energy source (1) of an apparatus for arc welding which is provided for a welding operation which is composed alternately of arcing periods, during which electrode material melts, and shorting periods, during which the molten electrode material is transferred from the electrode to the workpiece, which device has a first signal converter (4) for the measurement of a first variable (Is) dependent on the proceeding of the welding operation and for the formation of a signal (Us) corresponding to the first variable, a second signal converter (11) for the measurement of a second variable dependent on the proceeding of the welding operation and for the formation of a signal (Ub) corresponding to the second variable, a first circuit (12-20), connected to the output of the second signal converter (11), for the formation of a third signal (ΔUref) dependent on the second signal (Ub), and a second circuit (100, 5, 6, 24), which receives the third signal (ΔUref), forms a setpoint signal from the third signal and from a reference signal (Uref) and forms a system deviation ($\Delta U$), which corresponds to the difference between setpoint signal and the first signal (Us) and which second circuit emits at its output the system deviation for controlling the energy source (1) in dependence on the said system deviation, characterized in that a bandpass filter (23), in the band width of which a desired shorting frequency of the welding operation is included, is connected between the output of the second signal convertor (11) and the input of the second circuit (100, 5, 6, 24).

6. Device according to Claim 5, characterized in that the bandpass filter (23) is connected between the output of the first circuit (12-20) and the input of the second circuit (100, 5, 6, 24).

7. Device according to Claim 6, characterized in that the bandpass filter (23) consists essentially of a differentiating circuit (30) and a low-pass filter (32).

8. Device according to Claim 6 or 7, characterized in that the second circuit (100, 5, 6, 24) for the formation of the setpoint signal includes a subtractor (5), which receives the reference signal (Uref) at a P input (6) and the third signal ($\Delta$Uref) at an N input (24).

9. Device according to Claim 6, 7 or 8, characterized in that the first circuit (12-20) for the formation of the third signal includes a subtractor (12), which forms the difference between the second signal (Ub) and the signal (Ua) which corresponds to a certain operating point.

10. Device according to Claim 9, characterized in that the first circuit (12-20) includes a multiplier (18), which is provided with a first input, connected to the output of the subtractor (19), a second input, fed with the reference signal (Uref), and an output, connected to the bandpass filter (23).

**Revendications**

1. Procédé pour la régulation d'un processus de soudage au cours du soudage à l'arc d'une pièce à souder (10) au moyen d'une électrode fusible (9), dans lequel le processus de soudage comporte en succession alternée des périodes d'allumage de l'arc, pendant lesquelles la matière de l'électrode fond, et des périodes de court-circuit, pendant lesquelles la matière en fusion de l'électrode est transférée de celle-ci à la pièce à souder, ce procédé consistant à mesurer une première grandeur qui dépend du déroulement de l'opération de soudage, et à élaborer un premier signal (Us) qui correspond à cette grandeur ainsi qu'un signal de valeur de consigne, ce signal de valeur de consigne étant fonction d'un deuxième signal (Ub) qui correspond à une deuxième grandeur dépendant du déroulement de l'opération de soudage, le procédé consistant alors à rectifier la première grandeur en fonction de l'écart de régulation constaté entre le signal de valeur de consigne et le premier signal (Us), caractérisé en ce qu'on filtre le deuxième signal (Ub), en ce qu'on utilise le signal filtré ($\Delta$Uref) pour élaborer le signal de valeur de consigne, et en ce qu'on atténue les variations de la deuxième grandeur dépendant du déroulement de l'opération de soudage, qui se produisent à une fréquence située en dehors d'une plage de fréquence déterminée comprenant une valeur voulue de la fréquence de court-circuit de l'opération de soudage, si bien que ces variations ont moins d'effet sur le signal de valeur de consigne que les variations qui se produisent à une fréquence comprise dans la plage de fréquence précitée.

2. Procédé selon la revendication 1, caractérisé en ce qu'on obtient le signal de valeur de consigne, dont la valeur dépend d'un point de réglage (Ua, Iref) déterminé pour l'opération de soudage, en soustrayant le signal filtré ($\Delta$Uref) d'un signal de référence (Uref).

3. Procédé selon la revendication 1 ou 2, caractérisé en ce que, avant le traitement de filtrage, on élabore un signal différentiel ($\Delta$Ub) à partir du deuxième signal (Ub) et d'un signal (Ua) correspondant au point de fonctionnement.

4. Procédé selon la revendication 3, caractérisé en ce qu'on multiplie le signal différentiel ($\Delta$Ub) par le signal de référence (Uref), après la soustraction du signal (Ua) qui correspond au point de fonctionnement, mais avant le filtrage.

5. Dispositif pour la régulation d'une source d'alimentation en énergie (1) d'un appareil de soudage à l'arc prévu pour réaliser une opération de soudage qui comporte une succession alternée de périodes d'allumage de l'arc, pendant lesquelles la matière de l'électrode fond, et de périodes de court-circuit pendant lesquelles la matière en fusion de l'électrode est transférée de celle-ci à la pièce à souder, ce dispositif comportant un premier convertisseur de signal (4) pour mesurer une première grandeur (Is) qui dépend du déroulement de l'opération de soudage et pour élaborer un signal (Us) qui correspond à cette première grandeur, un deuxième convertisseur de signal (11) pour mesurer une deuxième grandeur qui dépend du déroulement de l'opération de soudage et pour élaborer un signal (Ub) qui correspond à cette deuxième grandeur, un premier circuit de courant (12-20) relié à la sortie du deuxième convertisseur de signal (11) pour produire un troisième signal ($\Delta$Uref) qui dépend du deuxième signal (Ub), et un deuxième circuit (100, 5, 6, 24) qui reçoit le troisième signal ($\Delta$Uref) et produit à partir du troisième signal et d'un signal de référence (Uref) un signal de valeur de consigne ainsi qu'un signal d'écart de régulalion ($\Delta$U), qui correspond à la différence entre le signal de valeur de consigne et le premier signal (Us), ce deuxième circuit produisant à sa sortie le signal de correction qui assure la régulation de la source d'énergie (1) en fonction du signal d'écart de régulation précité, caractérisé en ce qu'il comporte un passe-bande (23), monté entre la sortie du deuxième convertisseur de signal (11) et l'entrée du deuxième circuit (100, 5, 6, 24), la bande passante de ce passe-bande (23) comprenant une valeur souhaitée pour la fréquence de court-circuit de l'opération de soudage.

6. Dispositif selon la revendication 5, caractérisé en ce que le passe-bande (23) est monté entre la sortie du premier circuit (12-20) et l'entrée du deuxième circuit (100, 5, 6, 24).

7. Dispositif selon la revendication 6, caractérisé en ce que le passe-bande (23) est constitué essentiellement par un circuit différentiel (30) et un passe-bas (32).

8. Dispositif selon la revendication 6 ou 7, caractérisé en ce que le deuxième circuit (100, 5, 6, 24) prévu pour produire le signal de valeur de consigne comporte un organe soustracteur (5) ayant une entrée (6) de type P pour recevoir le signal de référence (Uref) et une autre entrée (24) de type N pour recevoir le troisième signal ($\Delta$UreF).

9. Dispositif selon la revendication 6, 7 ou 8, caractérisé en ce que le premier circuit (12-20) prévu pour produire le troisième signal comporte un organe soustracteur (72), qui établit la différence existant entre le deuxième signal (Ub) et le signal (Ua) qui correspond à un point de fonctionnement déterminé.

10. Dispositif selon la revendication 9, caractérisé en ce que le premier circuit (12-20) comporte un organe multiplicateur (18), pourvu d'une première entrée reliée à la sortie de l'organe soustracteur (19), d'une deuxième entrée qui reçoit le signal de référence (Uref), et d'une sortie qui est reliée au passe-bande (23).

FIG. 1

FIG.2

FIG. 3